# EUROPÄISCHE PATENTSCHRIFT

(11) **EP 1 897 760 B1**
(45) Veröffentlichungstag und Bekanntmachung des Hinweises auf die Patenterteilung: **29.07.2009**
(21) Anmeldenummer: 07015432.3
(22) Anmeldetag: 07.08.2007
(51) Int. Cl.: B60R 21/13

(54) **Sicherheitseinrichtung für ein Cabriolet und ein Verdeck mit einer derartigen Sicherheitseinrichtung**
Safety device for a convertible and soft top with such a safety device
Dispositif de sécurité pour un cabriolet et une capote dotée d'un tel dispositif de sécurité

(30) Priorität: 08.09.2006 DE 102006042257
(43) Veröffentlichungstag der Anmeldung: 12.03.2008
(73) Patentinhaber: Dr. Ing. h.c. F. Porsche Aktiengesellschaft, 70435 Stuttgart (DE); ISE Automotive GmbH, 51702 Bergneustadt (DE)
(72) Erfinder: Beierl, Dominik, 70825 Korntal-Münchingen (DE); Hermann, Felix, 71229 Leonberg (DE); Röhner, Stephan, Dr., 44287 Dortmund (DE)

(56) Entgegenhaltungen:
- EP-A- 1 510 412
- DE-U1-9202006 003 64
- FR-A- 2 878 211

## Beschreibung

Die Erfindung betrifft eine Sicherheitseinrichtung für ein Cabriolet gemäß Oberbegriff des Patentanspruchs 1 sowie eine Verdeck für ein Cabriolet gemäß Oberbegriff des Patentanspruchs 8.

Eine gattungsbildende Sicherheitseinrichtung ist aus der DE 20 2006 003 649 U1 bekannt und umfasst einen auch als aktive Überrollschutzeinrichtung bezeichneten aus einer eingefahrenen Ruhestellung in eine ausgefahrene Schutzstellungen verlagerbaren Überrollbügel. Ferner weist die Sicherheitseinrichtung ein Mittel zum Beeinflussen, d.h. Zerstören oder zumindest Schwächen, einer Heckscheibe auf, damit der ausfahrbare Überrollbügel die Scheibenebene nach einer Aktivierung des Mittels ohne allzu großen Widerstand durchstoßen kann, wodurch der Überrollbügel auch bei geschlossenem Verdeck in eine entsprechend hohe Schutzstellung ausfahren kann. Das Mittel zur Beeinflussung der Heckscheibe besitzt als Impulsantrieb eine pyrotechnische Ladung, die einen davor angeordneten Kolben antreibt.

Aufgabe der Erfindung ist, eine Sicherheitseinrichtung der eingangs genannten Art anzugeben, die mit einem optimierten Einbauraum auskommt.

Gelöst wird diese Aufgabe mit einer Sicherheitseinrichtung, die die in Patentanspruch 1 genannten Merkmale aufweist. Bevorzugte Ausführungsbeispiele sind in den abhängigen Ansprüchen angegeben. Die Aufgabe wird aber auch mit einem Verdeck mit einer solchen Sicherheitseinrichtung mit den Merkmalen des Patentanspruchs 8 gelöst.

Die mit der Erfindung hauptsächlich erzielten Vorteile sind darin zu sehen, dass gegenüber den hintereinander angeordneten Bauteilen (Impulsantrieb und Kolben) nach dem Stand der Technik bei der Erfindung der Impulsantrieb und der Kolben nahezu beliebig, beispielsweise nebeneinander, einander zugeordnet werden können, wodurch sich die Bauhöhe des erfindungsgemäßen Mittels zum Beeinflussen der Heckscheibe reduzieren lässt. Dies ermöglicht in besonders vorteilhafter Weise eine geringe Packhöhe eines Verdecks, wenn dieses in Ablagestellung abgelegt ist.

Ein besonders bevorzugtes Ausführungsbeispiel mit einer geringen Bauhöhe für das Mittel zum Beeinflussen der Heckscheibe ergibt sich nach den Merkmalen des Anspruchs 5.

Nach einem in Anspruch 7 angegebenen Ausführungsbeispiel ist es vorteilhaft, dass sich der Kolben nicht von dem Gehäuse lösen und unkontrolliert frei bewegen kann.

Die Erfindung wird nachfolgend anhand eines Ausführungsbeispiels mit Bezug auf die Zeichnung näher erläutert: Es zeigen:
- Fig. 1: ein Verdeck für ein Cabriolet mit einem Überrollschutzsystem einer Sicherheitseinrichtung und
- Fig. 2: von der Sicherheitseinrichtung ein Mittel zum Beeinflussen der Heckscheibe des Verdecks nach einem Schnitt II-II in Fig. 1.

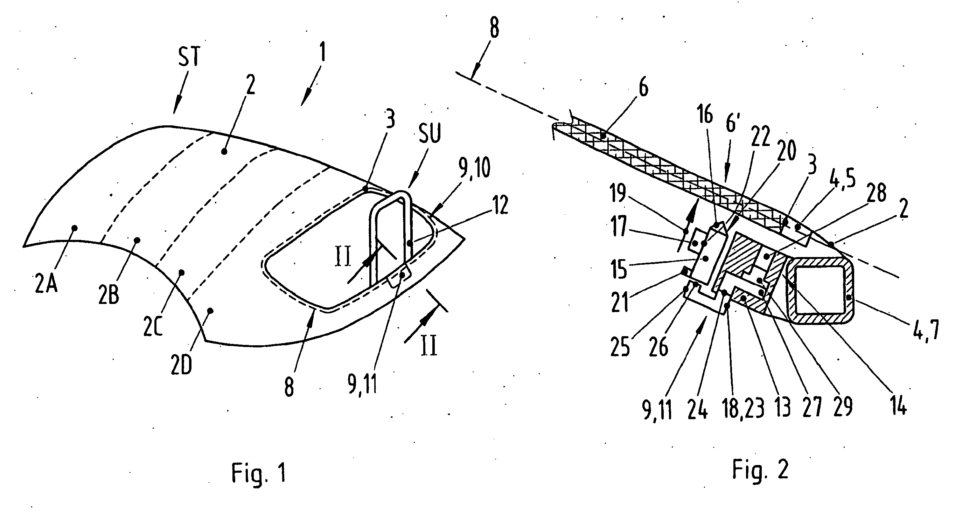

Die Fig. 1 zeigt ein Verdeck 1 für ein sonst nicht dargestelltes gezeigtes Cabriolet. Es weist eine Außenhaut 2 mit einem Heckscheibenausschnitt 3 auf, die von einem darunter angeordneten Verdeckgestell 4 getragen wird; von dem in Fig. 2 lediglich ein Heckscheibenrahmen 5 mit einer darin eingesetzten Heckscheibe 6, vorzugsweise aus einem Einscheibensicherheitsglas, und ein insbesondere für ein Softtop vorgesehener heckseitiger Stoff-Spannbügel 7 zu sehen sind. Die Heckscheibe 6 liegt in einer Scheibenebene 8, wenn das Verdeck in der in Fig. 1 gezeigten Schließstellung ST einen Fahrzeuginnenraum des Cabriolets überspannt. Das Verdeck 1 kann überdies in einem nicht dargestellten heckseitigen Ablagekasten des Cabriolets in Ablage- bzw. Packstellung abgelegt werden, indem die Außenhaut 2 und das Verdeckgestell 4 gefaltet bzw. zusammengeklappt werden, so dass in Schließstellung ST zumindest zwei, vorzugsweise mehrere hintereinander angeordnete Dachabschnitte 2A, 2B, 2C und 2D in Ablagestellung übereinander liegen, beispielsweise in der von oben nach unten gesehenen Reihenfolge 2A, 2B, 2D, 2C, so dass also der vordere Dachabschnitt 2A zuoberst liegt. Die übereinander abgelegten Dachabschnitte 2A, 2B, 2C, 2D definieren in der Ablagestellung die Packhöhe des Verdecks 1.

Dem Verdeck 1 ist eine Sicherheitseinrichtung 9 zugeordnet, die ein Überrollschutzsystem 10 und ein Mittel 11 zum Beeinflussen der Heckscheibe 6 umfasst. Das Überrollschutzsystem 10 weist zumindest einen aus einer nicht gezeigten eingefahrenen Ruhestellung in eine ausgefahrene Schutzstellung SU (Fig. 1) bewegbaren Überrollbügel 12 auf. In der Ruhestellung liegt der Überrollbügel 12 unterhalb der Außenhaut 2 und unterhalb der Scheibenebene 8. In der Schutzstellung hingegen hat er die Scheibenebene 8 durchstoßen und überragt diese und die Außenhaut 2. Für eine Aktivierung der Sicherheitseinrichtung 9, d.h. für ein Auslösen des Überrollbügels 12 in Schutzstellung SU und für eine Aktivierung des Mittels 11 ist eine nicht gezeigte Sensor- und Steuereinrichtung zuständig.

Bei einem entsprechenden von der Sensor- und Steuereinheit ermittelten Auslösekriterium, beispielsweise ein Fahrzeugüberschlag, wird das Mittel 11 aktiviert, so dass die Heckscheibe 6 dadurch so beeinflusst wird, dass der Überrollbügel 12 ohne sein Ausfahren verhindernden Widerstand die Scheibenebene 8 durchstoßen und seine Schutzstellung SU einnehmen kann.

Das unter der Heckscheibe 6 in deren Randbereich und insbesondere benachbart zu einem unteren Scheibenrand 6' liegende Mittel 11 ist wie folgt aufgebaut: Es besitzt eine Gehäuse 13, das an dem Verdeckgestell 4, im gezeigten Ausführungsbeispiel an dem Spannbügel 7, befestigt ist. Es kann alternativ an dem Heckscheibenrahmen 5 oder an einem anderen Gestellteil des Verdeckgestells 4 befestigt sein, wenn dieses in der Schließstellung ST benachbart zur Heckscheibe 6 zu liegen kommt. In dem Gehäuse 13 ist ein Impulsantrieb 14 und ein Kolben 15 mit einer die Heckscheibe beeinflussenden Spitze 16 verschiebbar gegen einen Endanschlag 17 gelagert. Die beim Aktivieren des Mittels 11 vom Impulsantrieb 14 erzeugte Energie wird über ein Antriebsumlenkelement 18 dem Kolben 15 zugeführt, damit dieser in Pfeilrichtung 19 in Richtung Heckscheibe 6 beschleunigt wird, um bei seinem Auftreffen auf die Heckscheibe 6 diese so zu Beeinflussen, dass der Überrollbügel 12 ohne den vorstehend erwähnten Widerstand in die Schutzstellung SU ausfahren kann. Der Kolben ist in dem Gehäuse 13 in einem Zylinder 20 geführt und weist einen Vorsprung 21 auf, der mit dem an der Zylinderwand 22 angeordneten Endanschlag 17 zusammenwirkt, um ein vollständiges Herausschießen des Kolbens 15 aus seinem Zylinder 20 zu vermeiden. An dem Gehäuse 13 ist ferner ein. Umlenkhebel 23 schwenkbar gelagert, der das Antriebsumlenkelement 18 bildet. Der Umlenkhebel 23 ist im gezeigten Ausführungsbeispiel etwa mittig in der Schwenkachse 24 gelagert und kann beispielsweise S-förmig geformt ausgeführt sein. Sein eines Ende 25 liegt benachbart zum Kolbenboden 26, während sein anderes Ende 27 benachbart zum Impulsantrieb 14 liegt. Der Impulsantrieb 14 umfasst zumindest eine pyrotechnische Ladung 28, die direkt auf das Ende 27 des Umlenkhebels 23 wirkt oder die einen Stempel 29, der im Gehäuse 13 in Reihe zur Ladung 28 liegt, beaufschlagt, der dann den Umlenkhebel 27 impulsartig bewegt. Impulsantrieb 14 und Kolben 15 sind im Gehäuse 13 etwa parallel, jedoch mit Abstand zueinander gelagert, während das Antriebsumlenkelement 18, insbesondere der Umlenkhebel 27, sich quer dazu zwischen dem Kolbenboden 26 und dem Stempel 29 erstreckt. Durch diese Anordnung lässt sich die Bauhöhe des Mittels 11 deutlich reduzieren, beispielsweise an die Höhe des Spannbügels 7 anpassen, um die Höhe des in Packstellung verlagerbaren Verdecks 1 nicht ungünstig zu beeinflussen.

## Patentansprüche

1. Sicherheitseinrichtung (9) für ein Cabriolet, mit einem aus einer eingefahrenen Ruhestellung in eine ausgefahrene Schutzstellung (ST) verlagerbaren Überrollschutzsystem (10) und mit einem Mittel (11) zum Beeinflussen einer Heckscheibe (6) eines Verdecks (1) des Cabriolets derart, dass nach einer Aktivierung des Mittels (11) das Überrollschutisystem (10) die Scheibenebene (8) durchstoßen kann, wobei das Mittel (11) einen Impulsantrieb (14) und einen über den Impulsantrieb (14) verlagerbaren Kolben (15) aufweist, der mit der Heckscheibe (6) zum Beeinflussen derselben zusammenwirkt, **dadurch gekennzeichnet, dass** zwischen dem verlagerbaren Kolben (15) und dem Impulsantrieb (14) ein Antriebsumlenkelement (18) angeordnet ist.

2. Sicherheitseinrichtung nach Anspruch 1, **dadurch gekennzeichnet, dass** das Antriebsumlenkelement (18) ein Umlenkhebel (23) ist.

3. Sicherheitseinrichtung nach Anspruch 1, **dadurch gekennzeichnet, dass** das Mittel (11) ein Gehäuse (13) aufweist, in dem der Impulsantrieb (14), das Antriebsumlenkelement (18), welches als Umlenkhebel (23) ausgebildet ist, und der Kolben (15) angeordnet sind.

4. Sicherheitseinrichtung nach Anspruch 3, **dadurch gekennzeichnet, dass** der Umlenkhebel (23) an dem Gehäuse (13) schwenkbar gelagert ist.

5. Sicherheitseinrichtung nach Anspruch 3 oder 4, **dadurch gekennzeichnet, dass** der Impulsantrieb (14) und der Kolben (15) etwa parallel zueinander und der Umlenkhebel (23) etwa quer dazu im Gehäuse (13) angeordnet sind.

6. Sicherheitseinrichtung nach Anspruch 3, 4 oder 5, **dadurch gekennzeichnet, dass** der Kolben (15) in einem Zylinder (20) des Gehäuses (13) geführt ist.

7. Sicherheitseinrichtung nach einem der vorhergehenden Ansprüche, **dadurch gekennzeichnet, dass** für den Kolben (15) ein Endanschlag (17) vorgesehen ist.

8. Verdeck (19 für ein Cabriolet, mit einer Heckscheibe (6), einem Verdeckgestell (2) und mit einer Sicherheitseinrichtung (9) nach zumindest einem der Ansprüche 1 bis 7, die der Heckscheibe (6) zugeordnet ist, **dadurch gekennzeichnet, dass** die Sicherheitseinrichtung (9) an dem Verdeckgestell (2), insbesondere einem heckseitigen Spannbügel (7) und/oder einem Heckscheibenrahmen (5), befestigt ist.

## Claims

1. Safety device (9) for a cabriolet, having a roll-over protective system (10) which can be displaced from a retracted rest position into an extended protective position (ST), and having a means (11) for influencing a rear pane (6) of a soft top (1) of the cabriolet in such a way that, after the means (11) is activated, the roll-over protective system (10) can penetrate the pane plane (8), the means (11) having a pulse drive (14) and a piston (15) which can be displaced via the pulse drive (14) and interacts with the rear pane (6) in order to influence the latter, **characterized in that** a drive deflection element (18) is arranged between the displaceable piston (15) and the pulse drive (14).

2. Safety device according to Claim 1, **characterized in that** the drive deflection element (18) is a deflection lever (23).

3. Safety device according to Claim 1, **characterized in that** the means (11) has a housing (13), in which the pulse drive (14), the drive deflection element (18) which is configured as a deflection lever (23), and the piston (15) are arranged.

4. Safety device according to Claim 3, **characterized in that** the deflection lever (23) is mounted pivotably on the housing (13).

5. Safety device according to Claim 3 or 4, **characterized in that** the pulse drive (14) and the piston (15) are arranged approximately parallel to one another and the deflection lever (23) is arranged approximately transversely with respect thereto in the housing (13).

6. Safety device according to Claim 3, 4 or 5, **characterized in that** the piston (15) is guided in a cylinder (20) of the housing (13).

7. Safety device according to one of the preceding claims, **characterized in that** an end stop (17) is provided for the piston (15).

8. Soft top (19) for a cabriolet, having a rear pane (6), a soft top frame (2) and having a safety device (9) according to at least one of Claims 1 to 7 which is assigned to the rear pane (6), **characterized in that** the safety device (9) is fastened to the soft top frame (2), in particular a rear-side tensioning hoop (7) and/or a rear-pane frame (5).

## Revendications

1. Dispositif de sécurité (9) pour un cabriolet, avec un système de protection contre les tonneaux (10) déplaçable entre une position de repos rentrée et une position de protection sortie (ST) et avec un moyen (11) pour influencer une lunette arrière (6) d'une capote (1) du cabriolet de telle manière que, après une activation du moyen (11), le système de protection contre les tonneaux (10) puisse s'enfoncer à travers le plan de la vitre (8), dans lequel le moyen (11) comprend un entraînement par impulsion (14) et un piston (15) déplaçable à l'aide de l'entraînement par impulsion (14), qui coopère avec la lunette arrière (6) pour influencer celle-ci, **caractérisé en ce qu'**un élément d'inversion d'entraînement (18) est disposé entre le piston déplaçable (15) et l'entraînement par impulsion (14).

2. Dispositif de sécurité selon la revendication 1, **caractérisé en ce que** l'élément d'inversion d'entraînement (18) est un levier d'inversion (23).

3. Dispositif de sécurité selon la revendication 1, **caractérisé en ce que** le moyen (11) comprend un boîtier (13), dans lequel sont installés l'entraînement par impulsion (14), l'élément d'inversion d'entraînement (18), qui est réalisé en forme de levier d'inversion (23), et le piston (15).

4. Dispositif de sécurité selon la revendication 3, **caractérisé en ce que** le levier d'inversion (23) est monté de façon articulée sur le boîtier (13).

5. Dispositif de sécurité selon la revendication 3 ou 4, **caractérisé en ce que** l'entraînement par impulsion (14) et le piston (15) sont disposés à peu près parallèlement l'un à l'autre et le levier d'inversion (23) est disposé à peu près transversalement à ceux-ci dans le boîtier (13).

6. Dispositif de sécurité selon la revendication 3, 4 ou 5, **caractérisé en ce que** le piston (15) est guidé dans un cylindre (20) du boîtier (13).

7. Dispositif de sécurité selon l'une quelconque des revendications précédentes, **caractérisé en ce qu'**il est prévu une butée d'extrémité (17) pour le piston (15).

8. Capote (19) pour un cabriolet, avec une lunette arrière (6), un cadre de capote (2) et avec un dispositif de sécurité (9) selon au moins une des revendications 1 à 7, qui est associé à la lunette arrière (6), **caractérisée en ce que** le dispositif de sécurité (9) est fixé au cadre de capote (2), en particulier à un étrier de serrage (7) côté hayon et/ou à un encadrement de lunette arrière (5).
